# EUROPEAN PATENT APPLICATION

(11) **EP 4 542 416 A1**
(43) Date of publication of application: **23.04.2025**
(21) Application number: 23838759.1
(22) Date of filing: 30.06.2023
(51) Int. Cl.: G06F 16/25

(54) **METHOD AND APPARATUS FOR DETERMINING CARBON EMISSIONS, AND DEVICE**

(30) Priority: 14.07.2022 CN 202210827467; 26.09.2022 CN 202211173847
(71) Applicant: Huawei Cloud Computing Technologies Co., Ltd., Guiyang, Guizhou 550025 (CN)
(72) Inventor: SHI, Jiayang, Guiyang, Guizhou 550025 (CN)
(74) Representative: Goddar, Heinz J.
(86) International application number: PCT/CN2023/104803
(87) International publication number: WO 2024/012267

(57) **Abstract**

This application discloses a determining method and apparatus for carbon emissions of a public cloud-based cloud resource, and a device, to determine the carbon emissions of the cloud resource. The method is applied to a cloud management platform. The cloud management platform is configured to manage an infrastructure that provides a cloud resource, where the infrastructure includes a plurality of cloud data centers disposed in different areas. The method includes: The cloud management platform obtains a query request of a tenant, where the query request is used to query carbon emissions of a cloud resource that belongs to the tenant; and then generates and outputs a query result, where the query result indicates carbon emissions generated by the cloud resource in a target cloud data center in each of one or more time periods, thereby facilitating carbon neutrality.

## Description

This application claims priorities to Chinese Patent Application No. 202210827467.8, filed with the China National Intellectual Property Administration on July 14, 2022 and entitled "DATA PROCESSING METHOD AND APPARATUS", and to Chinese Patent Application No. 202211173847.0, filed with the China National Intellectual Property Administration on September 26, 2022 and entitled "DETERMINING METHOD AND APPARATUS FOR CARBON EMISSIONS, AND DEVICE", both of which are incorporated herein by reference in their entireties.

### TECHNICAL FIELD

This application relates to the field of cloud computing, and in particular, to a determining method and apparatus for carbon emissions, and a device.

### BACKGROUND

Carbon neutrality usually means that a total amount (referred to as carbon emissions) of greenhouse gases, such as carbon dioxide, directly or indirectly generated by an enterprise or individual within a specific period of time are offset through afforestation, energy conservation and emission reduction, and the like, thereby achieving relative "zero emissions". Accurately collecting statistics on the carbon emissions generated by the enterprise or individual is the key to achieving carbon neutrality.

Because carbon emissions during electricity generation have become one of the largest sources of greenhouse gas emissions, it can be considered that an amount of electric energy consumed by the enterprise or individual determines the carbon emissions generated by the enterprise or individual. With high-density integration of information technology (information technology, IT) devices in a data center, heat dissipation of the IT devices keeps increasing. Carbon emissions of the data center have become one of the largest sources of greenhouse gas emissions. In the background of cloud computing, cloud resources purchased by the enterprise or individual are distributed in a plurality of IT devices in the data center. Currently, there is no method for collecting statistics on carbon emissions of the cloud resources. Therefore, it is difficult to accurately collect statistics on the carbon emissions generated by the enterprise or individual.

### SUMMARY

This application provides a determining method and apparatus for carbon emissions, and a device, to determine energy consumption information of a cloud resource.

According to a first aspect, this application provides a determining method for carbon emissions. The method is applied to a cloud management platform, the cloud management platform is configured to manage an infrastructure that provides a cloud resource, the infrastructure includes a plurality of cloud data centers disposed in different areas, and the method includes: The cloud management platform provides a query interface. The query interface is configured to obtain a query request of a tenant, the query request is used to query energy consumption information of a cloud resource that belongs to the tenant, and the cloud resource that belongs to the tenant runs in a target cloud data center of the infrastructure. Then, the cloud management platform generates a query result in response to the query request. The query result indicates carbon emissions generated by the cloud resource in the target cloud data center in each of one or more time periods. After generating the query result, the cloud management platform provides the query result for the tenant. This helps to collect statistics on electric energy consumed by and corresponding carbon emissions of an enterprise or individual, thereby achieving carbon neutrality.

Optionally, that the cloud management platform generates a query result in response to the query request includes: The cloud management platform determines first power consumption of a resource type device associated with the cloud resource in the target cloud data center, first utilization of the cloud resource on the resource type device, second power consumption of an operation type device associated with the cloud resource, second utilization of the cloud resource on the operation type device, third power consumption of a data center environment control device associated with the cloud resource, and third utilization of the cloud resource on the data center environment control device. The cloud management platform determines, based on the first power consumption, the second power consumption, the third power consumption, the first utilization, the second utilization, and the third utilization, energy consumption generated by the cloud resource in the target cloud data center in each of the one or more time periods. The cloud management platform obtains an electricity composition proportion from an electricity input side of the target cloud data center. The cloud management platform determines the carbon emissions based on the energy consumption and the electricity composition proportion. Because carbon emissions generated by unit electric energy generated in different electricity generation manners generally differ greatly, by way of obtaining the electricity composition proportion from the electricity input side of the target cloud data center, this helps determine carbon emissions more accurately.

Optionally, the electricity composition proportion includes proportions of different electricity generation manners at each moment in total electricity provided by the electricity input side. Carbon emissions generated by unit electric energy generated by different electricity generation manners generally differ greatly, and the proportions of the different electricity generation manners in the total electricity provided by the electricity input side may change. By way of obtaining the proportions of the different electricity generation manners at each moment in the total electricity provided by the electricity input side, this helps determine carbon emissions more accurately.

Optionally, the resource type device is a set of first electrical devices configured to bear the cloud resource. Based on the first power consumption of the resource type device associated with the cloud resource in the target cloud data center and the first utilization of the cloud resource on the resource type device, this helps determine power consumption shared by the cloud resource from the first power consumption, and help determine carbon emissions of the cloud resource in the target cloud data center more accurately. Optionally, the resource type device is an IT device.

Optionally, the operation type device is a set of second electrical devices configured to manage the cloud resource. Based on the second power consumption and the second utilization, this helps determine power consumption shared by the cloud resource from the second power consumption, and helps determine carbon emissions of the cloud resource in the target cloud data center more accurately. Optionally, the operation type device is an IT device.

Optionally, the data center environment control device is a set of third electrical devices configured to provide proper temperature and/or humidity for the cloud resource (or the resource type device and/or the operation type device). Running of the cloud resource causes an increase in power of the resource type device and the operation type device, and may dissipate more heat to a surrounding environment, thereby causing an increase in power consumption of the data center environment control device (for example, an air conditioner). Based on the third power consumption and the third utilization, this helps determine power consumption shared by the cloud resource from the third power consumption, and helps determine carbon emissions of the cloud resource in the target cloud data center more accurately. Optionally, the data center environment control device is a non-IT device.

Optionally, the cloud resource includes a virtual instance, or the cloud resource includes a virtual service running on a virtual instance. By way of mapping the cloud resource to the virtual instance running in the target cloud data center, this helps collect statistics on energy consumption information of the cloud resource deployed in the cloud data center by the enterprise or individual more accurately.

Optionally, the first utilization is determined based on at least one of the following information: a size of an information technology IT resource of the resource type device, utilization of the IT resource of the resource type device, a size of a virtual IT resource, utilization of the virtual IT resource, a size of another virtual IT resource, utilization of the another virtual IT resource, a type of the virtual instance, and a life cycle of the virtual instance. The virtual IT resource is an IT resource allocated by the resource type device to the virtual instance, the another virtual IT resource is an IT resource allocated by the resource type device to another virtual instance, and the another virtual instance is a virtual instance other than the virtual instance running on the resource type device.

Generally, the IT resources of the resource type device and the virtual instance may be accurately monitored. Therefore, based on usage (size and/or utilization) of the IT resource of the resource type device and/or the virtual instance, this helps determine the first utilization more accurately, and determine energy consumption generated by the cloud resource in the target cloud data center more accurately.

Because the IT resource of the resource type device is shared by all virtual instances running on the resource type device, usage (size and/or utilization) of the IT resource of the another virtual instance also affects the first utilization. Based on the usage of the IT resource of the another virtual instance, this helps determine the first utilization more accurately, and determine energy consumption generated by the cloud resource in the target cloud data center more accurately.

The type of the virtual instance and the life cycle in which the virtual instance is located also affect the first utilization. Therefore, based on the type of the virtual instance and/or the life cycle in which the virtual instance is located, this helps determine the first utilization more accurately, and determine energy consumption generated by the cloud resource in the target cloud data center more accurately.

Optionally, a target virtual instance includes a virtual instance of a target type or a target area in all virtual instances that belong to the tenant, and the virtual instance of the target area is a virtual instance running in a cloud data center of the target area. For example, the query result may indicate energy consumption information of all the virtual instances of the tenant, so that the tenant knows energy consumption information of the tenant in the cloud data center. Alternatively, for example, the query result may indicate energy consumption information of all virtual instances of a specific type (for example, a VM) that belong to the tenant in the target cloud data center, so that the tenant determines a type of virtual instance that consumes low electric energy, and further reduces carbon emissions of the tenant by adjusting the type of the virtual instance. Alternatively, for example, the query result may indicate energy consumption of all cloud resources on a same IT device in the target cloud data center, so that the tenant determines IT devices whose cloud resources consume low electric energy, and further reduces power consumption and carbon emissions of the tenant by adjusting a deployment location of the cloud resources.

According to a second aspect, this application provides a determining apparatus for carbon emissions. The determining apparatus is used in a cloud management platform, the cloud management platform is configured to manage an infrastructure that provides a cloud resource, the infrastructure includes a plurality of cloud data centers disposed in different areas, and the apparatus includes: a communication module, configured to provide a query interface, where the query interface is configured to obtain a query request of a tenant, the query request is used to query energy consumption information of a cloud resource that belongs to the tenant, and the cloud resource that belongs to the tenant runs in a target cloud data center of the infrastructure; and a processing module, configured to generate a query result in response to the query request, where the query result indicates carbon emissions generated by the cloud resource in the target cloud data center in each of one or more time periods. The communication module is further configured to provide the query result for the tenant.

Optionally, the processing module is specifically configured to: determine first power consumption of a resource type device associated with the cloud resource in the target cloud data center, first utilization of the cloud resource on the resource type device, second power consumption of an operation type device associated with the cloud resource, second utilization of the cloud resource on the operation type device, third power consumption of a data center environment control device associated with the cloud resource, and third utilization of the cloud resource on the data center environment control device; determine, based on the first power consumption, the second power consumption, the third power consumption, the first utilization, the second utilization, and the third utilization, energy consumption generated by the cloud resource in the target cloud data center in each of the one or more time periods; obtain an electricity composition proportion from an electricity input side of the target cloud data center; and determine the carbon emissions based on the energy consumption and the electricity composition proportion.

Optionally, the electricity composition proportion includes proportions of different electricity generation manners at each moment in total electricity provided by the electricity input side.

Optionally, the resource type device is a set of first electrical devices configured to bear the cloud resource. Optionally, the operation type device is a set of second electrical devices configured to manage the cloud resource. Optionally, the data center environment control device is a set of third electrical devices configured to provide proper temperature and/or humidity for the cloud resource. Optionally, the cloud resource includes a virtual instance, or the cloud resource includes a virtual service running on a virtual instance.

Optionally, the first utilization is determined based on at least one of the following information: a size of an information technology IT resource of the resource type device, utilization of the IT resource of the resource type device, a size of a virtual IT resource, utilization of the virtual IT resource, a size of another virtual IT resource, utilization of the another virtual IT resource, a type of the virtual instance, and a life cycle of the virtual instance. The virtual IT resource is an IT resource allocated by the resource type device to the virtual instance, the another virtual IT resource is an IT resource allocated by the resource type device to another virtual instance, and the another virtual instance is a virtual instance other than the virtual instance running on the resource type device.

Optionally, a target virtual instance includes a virtual instance of a target type or a target area in all virtual instances that belong to the tenant, and the virtual instance of the target area is a virtual instance running in a cloud data center of the target area.

According to a third aspect, this application provides a computing device cluster, including at least one computing device. Each computing device includes a processor and a memory. A processor of the at least one computing device is configured to execute instructions stored in a memory of the at least one computing device, to enable the computing device cluster perform the method described in any one of the first aspect or the possible implementations of the first aspect.

According to a fourth aspect, this application provides a computer-readable storage medium. The computer-readable storage medium stores a computer program, and when the computer program is executed by a processor, the processor performs the method described in any one of the first aspect or the possible implementations of the first aspect.

According to a fifth aspect, this application provides a chip system. The chip system includes a processor and an interface circuit, the processor is coupled to a memory by using the interface circuit, and the processor is configured to execute program code in the memory, to perform the method described in any one of the first aspect or the possible implementations of the first aspect. The chip system may include a chip, or may include a chip and another discrete component.

According to a sixth aspect, this application provides a computer program product, and when program code included in the computer program product is executed by a computer device, the method described in any one of the first aspect or the possible implementations of the first aspect can be performed in this application.

According to a seventh aspect, this application provides a system. The system includes a cloud management platform and an infrastructure configured to provide a cloud resource, the infrastructure includes a plurality of cloud data centers disposed in different areas, and the cloud management platform is configured to perform the method described in any one of the first aspect or the possible implementations of the first aspect.

The apparatuses provided in this application may be configured to perform the foregoing corresponding methods. Therefore, for technical effects that can be achieved by the apparatuses in this application, refer to the technical effects achieved by the foregoing corresponding methods. Details are not described herein again.

### BRIEF DESCRIPTION OF DRAWINGS

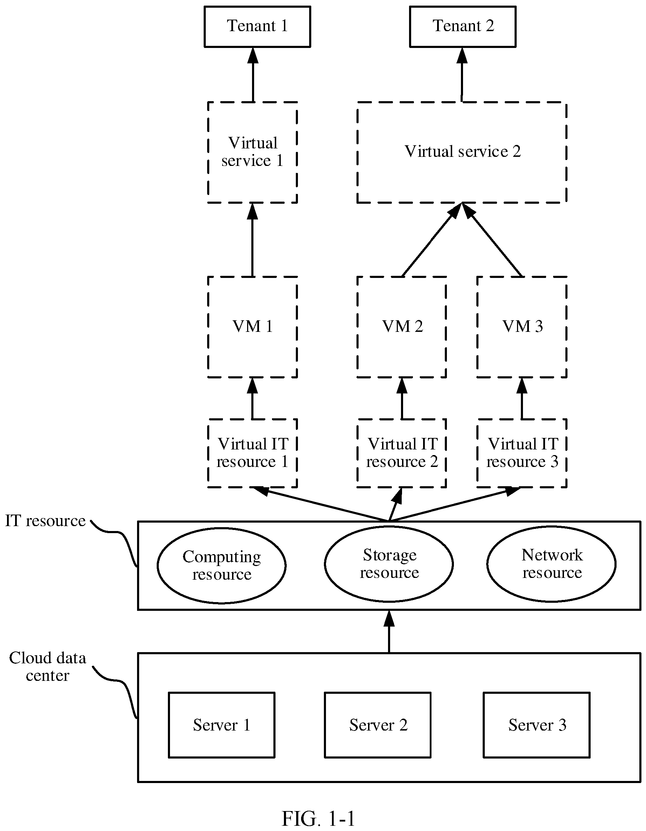

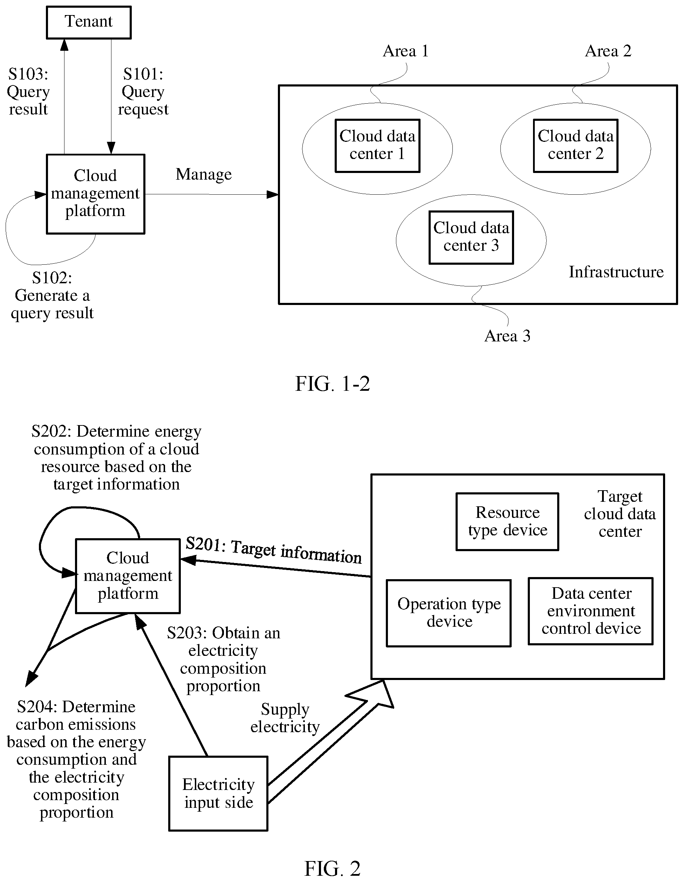

FIG. 1-1 is an example diagram of running a cloud resource in a cloud data center;
FIG. 1-2 shows an example of a system architecture to which this application is applicable;
FIG. 2 shows an example of a process of a method for determining carbon emissions by a cloud management platform;
FIG. 3 shows an example of a possible solution in which a cloud management platform determines energy consumption of a cloud resource;
FIG. 4-1 and FIG. 4-2 separately show examples of electricity input compositions on an electricity input side;
FIG. 5 shows an example of a possible structure of a determining apparatus according to this application;
FIG. 6 shows an example of a possible structure of a processing module shown in FIG. 5;
FIG. 7 shows an example of an energy consumption surface of resource quantity-utilization rate;
FIG. 8 shows an example of a possible structure of a computing device;
FIG. 9 shows an example of a possible structure of a computing device cluster; and
FIG. 10 shows an example of a connection manner in a computing device cluster.

### DESCRIPTION OF EMBODIMENTS

A public cloud is usually a cloud that can be used by a user and that is provided by one or more cloud data centers. A cloud management platform provides an access interface for a tenant to access the public cloud. The tenant can operate a client to remotely access the access interface, to register a cloud account and password on the cloud management platform and log in to the cloud management platform. After the cloud account and password are authenticated by the cloud management platform, the tenant can further select and purchase a virtual instance of a specific specification (processor, memory, and disk) and type (VM or container) on the cloud management platform through payment. After the purchase is successful, the cloud management platform provides a remote login account and password of the purchased virtual instance, the client may remotely log in to the virtual instance, and install and run an application of the tenant in the virtual instance.

FIG. 1-1 is an example diagram of running a cloud resource in a cloud data center. Refer to FIG. 1-1. The cloud data center includes at least one or more servers. FIG. 1-1 shows only three servers as an example, and the cloud data center may include more or fewer servers. The server is an IT device, and can provide an IT resource. Optionally, the IT resource includes at least one of a computing resource, a storage resource, and a network resource.

One or more virtual instances can run on one or more servers. An implementation of the virtual instance is not limited in this application, for example, a virtual machine (virtual machine, VM), a container, or a bare metal server. FIG. 1-1 uses an example in which a virtual instance is a VM, and shows an example of a VM 1 that belongs to a tenant 1, and a VM 2 and a VM 3 that belongs to a tenant 2.

One or more servers can allocate some IT resources to running virtual instances. Refer to FIG. 1-1. In this application, IT resources allocated to the VM 1, the VM 2, and the VM 3 are respectively referred to as a virtual IT resource 1, a virtual IT resource 2, and a virtual IT resource 3. The virtual instance can run one or more applications (or virtual services) based on the allocated IT resources. FIG. 1-1 shows an example of a virtual service 1 provided by the VM 1. That each virtual instance independently provides one service is not limited in this application. Refer to FIG. 1-1. The VM 2 and the VM 3 may jointly provide a virtual service 2.

Optionally, the service may be a basic cloud service. For example, the basic cloud service may be an infrastructure as a service (infrastructure as a service, IaaS). For example, the basic cloud server is an elastic compute service (elastic compute service, ECS), a virtual private cloud (virtual private cloud, VPC), an elastic volume service (elastic volume service, EVS), or a relational database service (relational database service, RDS). Optionally, the service may be an upper-layer cloud service. For example, the upper-layer cloud service is a platform as a service (platform as a service, PaaS) or software as a service (software as a service, SaaS). For example, the upper-layer cloud service is a cloud container engine (cloud container engine, CCE), a network elastic load balancer (elastic load balancer, ELB), data lake insight (data lake insight, DLI), natural language processing (natural language process, NLP), or the like.

It should be noted that the server 1 to the server 3 shown in FIG. 1-1 are not limited in this application to servers disposed in a single cloud data center. Optionally, the cloud data center shown in FIG. 1-1 includes one or more cloud data centers. In some examples, the cloud resource mentioned in this application may include at least one of the following resources: a virtual IT resource allocated to a virtual instance, a virtual instance, and a virtual service running on a virtual instance.

With rapid development of industry, energy crisis and environmental deterioration become increasingly serious. To promote energy conservation and emission reduction, accurately collecting statistics on carbon emissions of an enterprise or individual is required to achieve carbon neutrality. This application provides a determining method for carbon emissions of a public cloud-based cloud resource. The following first describes a system architecture to which the method is applicable.

FIG. 1-2 shows an example of a system architecture. Refer to FIG. 1-2. The system architecture includes a cloud management platform and an infrastructure that provides a cloud resource. The infrastructure includes a plurality of cloud data centers disposed in different areas, and the cloud management platform is configured to manage the infrastructure. Optionally, the different areas refer to different geographical location areas. For example, the different areas refer to different cities or different areas in a same city. FIG. 1-2 shows an example of a cloud data center 1 disposed in an area 1, a cloud data center 2 disposed in an area 2, and a cloud data center 3 disposed in an area 3 in the infrastructure. Optionally, the infrastructure includes more or fewer cloud data centers than those shown in FIG. 1-2.

Based on the system architecture shown in FIG. 1-2, this application provides a determining method for carbon emissions of a public cloud-based cloud resource. Refer to FIG. 1-2. The determining method includes steps S101 to S103.

S101: Obtain a query request of a tenant.

The cloud management platform provides a query interface for the tenant, and the query interface is configured to obtain the query request of the tenant. The query request is used to query energy consumption information of a cloud resource that belongs to the tenant. In the following, in this application, a cloud data center that is in the infrastructure and that is used to run the cloud resource is referred to as a target cloud data center. Optionally, the target cloud data center is the cloud data center shown in FIG. 1-1. Still refer to FIG. 1-1. It is assumed that the tenant is the tenant 1, and the cloud resource may include at least one resource of the virtual IT resource 1, the VM 1, and the virtual service 1. In this application, the cloud resource is not limited to all cloud resources that belong to the tenant. Optionally, the tenant may specify, in the query request, a type or an area of a to-be-queried cloud resource.

Optionally, the type of the cloud resource may indicate that the cloud resource is a virtual instance or a virtual service running on a virtual instance. Alternatively, optionally, the cloud resource is a virtual instance, and the type of the cloud resource may indicate that the virtual instance is a virtual machine VM (virtual machine, VM), a container, a bare metal server, or the like. After the tenant enters or selects the type of the cloud resource through the query interface, the cloud management platform may determine that the tenant requests to query the energy consumption information of the cloud resource that belongs to the tenant and that is of the type. For example, the tenant specifies, through the query interface, that the type of the cloud resource is a VM through entering and selecting, and the cloud management platform may determine that the tenant requests to query energy consumption information of all VMs that belong to the tenant.

The area of the cloud resource may be an area in which the cloud data center used to run the cloud resource is located. After the tenant enters or selects the area of the cloud resource through the query interface, the cloud management platform may determine that the tenant requests to query the energy consumption information of the cloud resource that belongs to the tenant and that is in the area. For example, when the tenant specifies the area 1 through the query interface through entering and selecting, the cloud management platform may determine that the tenant requests to query energy consumption information of a cloud resource that belongs to the tenant and that runs in the cloud data center 1.

The target cloud data center may include one or more cloud data centers in the infrastructure. For example, it is assumed that the cloud data center 1 to the cloud data center 3 separately run the VM of the tenant. When the tenant specifies, through the query interface, that the type of the cloud resource is the VM through entering and selecting, the target cloud data center includes the cloud data center 1, the cloud data center 2, and the cloud data center 3.

S 102. Generate a query result in response to the query request.

After obtaining the query request, the cloud management platform may generate the query result in response to the query request. The query result indicates carbon emissions generated by the cloud resource in the target cloud data center in each of one or more time periods. Duration of a single time period is not limited in this application. Optionally, the duration of the single time period is one hour, one day, or one month. Optionally, the duration of the single time period is default, or preset by the tenant, or set by the tenant through the query interface. A quantity of time periods in the one or more time periods is not limited in this application. Optionally, the one or more time periods are default, preset by the tenant, or set by the tenant through the query interface. For example, each of the one or more time periods is each hour in a latest day, or each of the one or more time periods is each day in a latest week.

The following describes, by using an example, a determining method for carbon emissions generated by the cloud resource in the target cloud data center in each of the one or more time periods. Details are not described herein. This application does not limit the determining method for carbon emissions performed by the cloud management platform. The following uses only an example in which the cloud management platform performs the method. Optionally, after another device other than the cloud management platform performs the method and determines the carbon emissions, the cloud management platform may obtain the carbon emissions from the device, to generate the query result.

S103: Provide the query result for the tenant.

After generating the query result, the cloud management platform may provide the query result for the tenant. In this way, the tenant may determine carbon emissions generated by the cloud resource in the infrastructure.

FIG. 2 shows an example of a process of a method for determining carbon emissions by a cloud management platform. Refer to FIG. 2. The method for determining, by a cloud management platform, the carbon emissions generated by a cloud resource in target cloud data center includes steps S201 to S204.

S201: Determine target information.

After obtaining a query request, the cloud management platform may obtain information (referred to as the target information) about a cloud data center (that is, the target cloud data center) used to run the cloud resource. The target cloud data center includes one or more cloud data centers, and each cloud data center usually includes at least one device associated with the cloud resource. Refer to FIG. 2. A device associated with the cloud resource in the target cloud data center may include but is not limited to three types of devices: a resource type device associated with the cloud resource, an operation type device associated with the cloud resource, and a data center environment control device associated with the cloud resource. The target information may include information about at least one type of device in the three types of devices.

Optionally, the resource type device is a set of first electrical devices configured to bear the cloud resource. Optionally, the first electrical device is the server shown in FIG. 1-1. Information about the resource type device may include but is not limited to first power consumption of the resource type device and first utilization of the cloud resource on the resource type device. Optionally, the first power consumption indicates power consumption of the resource type device in each of one or more time periods, and the first utilization indicates utilization of the cloud resource on the resource type device in each of the one or more time periods.

Optionally, the operation type device is a set of second electrical devices configured to manage the cloud resource. The operation type device may provide a management service for the cloud resource. Optionally, the management service includes a service for detecting information about the cloud resource (a monitoring service for short). For example, the information about the cloud resource includes a type and a life cycle of the cloud resource, and usage (for example, utilization of an IT resource) of each dimension in a running process. Optionally, the usage includes at least one of the following data: CPU utilization, a disk read/write bandwidth, a disk read/write IOPS, an out-of-band network inbound and outbound rate, a quantity of network connections, an inbound and outbound throughput rate, and the like. For example, the cloud resource is an elastic public network IP (elastic IP address, EIP). Optionally, operation data of the elastic public network IP includes at least one of an inbound and outbound bandwidth, inbound and outbound traffic, and inbound and outbound bandwidth utilization of the elastic public network IP. Herein, IP refers to an internet protocol (internet protocol). For example, the cloud resource is an elastic load balancer. Optionally, the usage includes at least one of the following data: an active/inactive connection quantity, an incoming/outgoing data packet quantity, a network incoming/outgoing rate, a normal host quantity, an abnormal host quantity, a client reset quantity, a concurrent connection quantity, a load balancer reset quantity, and the like of the elastic load balancer. A device configured to run the cloud management platform is not limited in this application. In some examples, the cloud management platform runs on one or more second electrical devices in the operation device. Information about the operation type device may include but is not limited to second power consumption of the operation type device and second utilization of the cloud resource on the operation type device. Optionally, the second power consumption indicates power consumption of the operation type device in each of the one or more time periods, and the second utilization indicates utilization of the cloud resource on the operation type device in each of the one or more time periods.

Optionally, the data center environment control device is a set of third electrical devices configured to provide proper temperature and/or humidity for the cloud resource. Optionally, each third electrical device is a non-IT device. For example, the third electrical device is, for example, a cooler, a humidifier, an air conditioning unit in a computer room, a power distribution unit (power distribution unit, PDU), an uninterruptible power supply (uninterruptible power supply, UPS), a lighting device, a switch device, an electric generator, or a monitoring device. Information about the data center environment control device may include but is not limited to third power consumption of the data center environment control device and third utilization of the cloud resource on the data center environment control device. Optionally, the third power consumption indicates power consumption of the data center environment control device in each of the one or more time periods, and the third utilization indicates utilization of the cloud resource on the data center environment control device in each of the one or more time periods.

The following describes the first utilization, the second utilization, and the third utilization by using examples. Details are not described herein.

S202: Determine energy consumption of the cloud resource based on the target information.

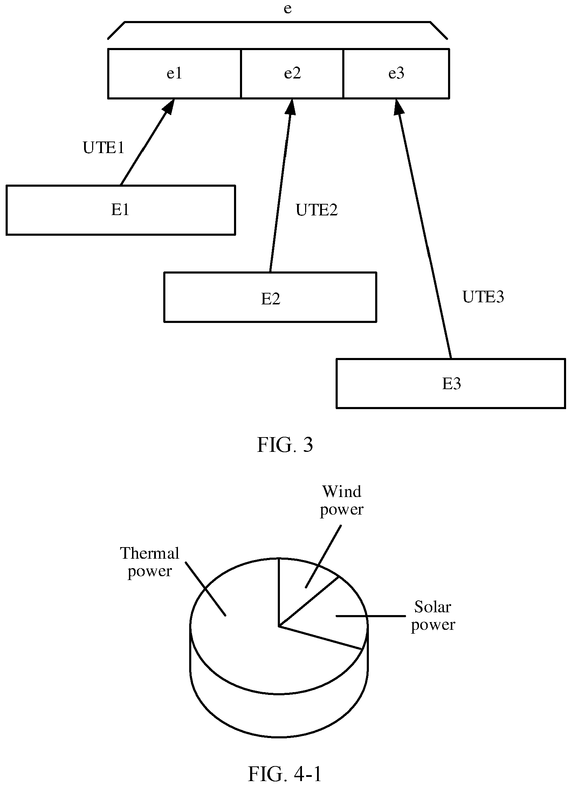

After determining the target information, the cloud management platform may determine, based on the target information, the energy consumption generated by the cloud resource in the target cloud data center in each of the one or more time periods. In this application, any one of the one or more time periods is referred to as a target time period. FIG. 3 shows an example of a solution in which the cloud management platform determines energy consumption (denoted as e) generated by the cloud resource in the target cloud data center in the target time period.

In FIG. 3, E1 is used to represent power consumption of the resource type device in the target time period, and e1 is used to represent power consumption shared by the cloud resource from E1. In a process in which the resource type device runs the cloud resource in the target time period, electric energy is consumed. For example, the cloud service is a distributed message service. An increase in use of the distributed message service causes an increase in CPU power, memory power, a network access bandwidth, network packet processing, and the like in the resource type device, thereby increasing power consumption of the resource type device. Therefore, the energy consumption (that is, e) generated by the cloud resource in the target cloud data center in the target time period includes the energy consumption (that is, e1) shared by the cloud resource from E1. This helps determine carbon emissions of the cloud resource in the target cloud data center more accurately. Still refer to FIG. 3. A UTE1 is used to represent utilization of the cloud resource on the resource type device in the target time period, and the cloud management platform may determine e1 based on the UTE1 and E1. Optionally, the UTE1 reflects a contribution of the cloud resource to E1. A larger UTE1 indicates a larger proportion of e1 in E1.

Optionally, the first utilization or the UTE1 is determined based on at least one of the following information: a size of an information technology IT resource of the resource type device, utilization of the IT resource of the resource type device, a size of a virtual IT resource, utilization of the virtual IT resource, a size of another virtual IT resource, utilization of the another virtual IT resource, a type of a virtual instance, and a life cycle of the virtual instance. The virtual IT resource is an IT resource allocated by the resource type device to the virtual instance, the another virtual IT resource is an IT resource allocated by the resource type device to another virtual instance, and the another virtual instance is a virtual instance other than the virtual instance running on the resource type device.

As described above, the IT resource includes at least one of the computing resource, the storage resource, and the network resource. Therefore, the size of the IT resource may refer to at least one of a size of the computing resource, a size (or a large specification) of the storage resource, and a size (or a maximum specification) of the network resource. The utilization of the IT resource may refer to at least one of utilization of the computing resource, utilization of the storage resource, and utilization of the network resource. The size herein may refer to a maximum available size. Optionally, the utilization of the computing resource includes CPU utilization, memory utilization, and/or the like. Optionally, the utilization of the storage resource includes the disk read/write bandwidth and/or the disk read/write input/output operations per second (input/output operations per second, IOPS). Optionally, the utilization of the network resource includes but is not limited to at least one of the following: the out-of-band network inbound and outbound rate, the quantity of network connections, a virtual machine inbound and outbound network bandwidth, a virtual machine inbound and outbound network throughput rate, and the like.

Generally, the sizes and utilization of the IT resources of the resource type device and the virtual instance may be accurately monitored. Therefore, based on usage (size and/or utilization) of the IT resource of the resource type device and/or the virtual instance, this helps determine the first utilization more accurately, and determine the energy consumption generated by the cloud resource in the target cloud data center more accurately. Different types of virtual instances may consume different electric energy. Therefore, in some examples, configuration information of the virtual instance may include the type of the virtual instance. For example, the type of the virtual instance may be a VM, a container, a bare metal server, or the like.

Because the IT resource of the resource type device is shared by all virtual instances running on the resource type device, usage (size and/or utilization) of the IT resource of the another virtual instance also affects the first utilization. Based on the usage of the IT resource of the another virtual instance, this helps determine the first utilization more accurately, and determine the energy consumption generated by the cloud resource in the target cloud data center more accurately.

The life cycle of the virtual instance may indicate that a state of the virtual instance changes with time. The state of the virtual instance in a specific time period may be a running state or a stopped state, and states of the virtual instance in different time periods may be different. In this application, any one of the one or more time periods is referred to as the target time period, and the target time period may include a plurality of sub-time periods. For example, the virtual instance is in a stopped state in a first sub-time period of the target time period, and is switched to a running state in a second sub-time period, and the like. Electric energy consumed by the virtual instance in different states is generally different. Therefore, based on the type of the virtual instance and/or the life cycle in which the virtual instance is located, this helps determine the first utilization more accurately, and determine energy consumption generated by the cloud resource in the target cloud data center more accurately.

As described above, the type of the virtual instance may be a VM, a container, a bare metal server, and the like. Because electric energy consumed by different types of virtual instances may be different, based on the type of the virtual instance, this helps determine the first utilization more accurately, and determine the energy consumption generated by the cloud resource in the target cloud data center more accurately.

In FIG. 3, E2 is used to represent power consumption of the operation type device in the target time period, and e2 is used to represent power consumption shared by the cloud resource from E2. In a process in which the resource type device runs the cloud resource in the target time period, the operation type device needs to manage the cloud resource. For example, the operation type device is configured to run the cloud management platform. If the cloud management platform provides an interface for a tenant to access a target virtual instance, power consumption of the operation type device is increased. For example, the operation type device runs a monitoring service. If the monitoring service monitors information about the target virtual instance, the power consumption of the operation type device is increased. For example, the operation type device provides a network or security service (for example, a switch or a firewall). This type of service provides a network or security service or the like for data of the target virtual instance, which increases the power consumption of the operation type device. Therefore, the energy consumption (that is, e) generated by the cloud resource in the target cloud data center in the target time period includes the energy consumption (that is, e2) shared by the cloud resource from E2. This helps determine carbon emissions of the cloud resource in the target cloud data center more accurately. A UTE2 is used to represent utilization of the cloud resource on the operation type device in the target time period, and the cloud management platform may determine e2 based on the UTE2 and E2. Optionally, the UTE2 reflects a contribution of the cloud resource to E2. A larger UTE2 indicates a larger proportion of e2 in E2. For example, the operation type device provides a monitoring service for the cloud resource. Optionally, the second utilization or the UTE2 is determined based on a data volume of information about the cloud resource detected by the operation type device. More information about the detected cloud resource indicates a larger second utilization or UTE2. Optionally, the second utilization or the UTE2 is determined based on the first utilization or the UTE1, and a larger first utilization or UTE1 indicates a larger second utilization or UTE2. Alternatively, optionally, the second utilization or the UTE2 is determined based on the foregoing factors.

In FIG. 3, E3 is used to represent power consumption of the data center environment control device in the target time period, and e3 is used to represent power consumption shared by the cloud resource from E3. In a process in which the resource type device runs the cloud resource in the target time period, and/or in a process in which the operation type device manages the cloud resource, the data center environment control device needs to provide proper temperature and/or humidity for the resource type device and/or the operation type device. Therefore, energy consumption (that is, e) generated by the cloud resource in the target cloud data center in the target time period includes energy consumption (that is, e3) shared by the cloud resource from E3. This helps determine carbon emissions of the cloud resource in the target cloud data center more accurately. A UTE3 is used to represent utilization of the cloud resource on the data center environment control device in the target time period, and the cloud management platform may determine e3 based on the UTE3 and E3. Optionally, the UTE3 reflects a contribution of the cloud resource to E3. A larger UTE3 indicates a larger proportion of e3 in E3. Optionally, the third utilization or the UTE3 is determined based on the first utilization or the UTE1, and a larger first utilization or UTE1 indicates a larger third utilization or UTE3.

Based on the solution shown in FIG. 3 for determining the energy consumption generated by the cloud resource in the target cloud data center in the target time period, the cloud management platform may determine the energy consumption generated by the cloud resource in the target cloud data center in each of the one or more time periods.

S203: Obtain an electricity composition proportion from an electricity input side of the target cloud data center.

The electricity input side is used to supply power to an electrical device that includes but is not limited to the target cloud data center. An electricity generation manner used on the electricity input side is not limited in this application. Optionally, the electricity input side uses at least one of electricity generation manners: diesel power generation, wind power generation, solar power generation, steam power generation, and thermal power generation. Correspondingly, total electric energy consumed by the target cloud data center in the target time period may come from one or more electricity generation manners.

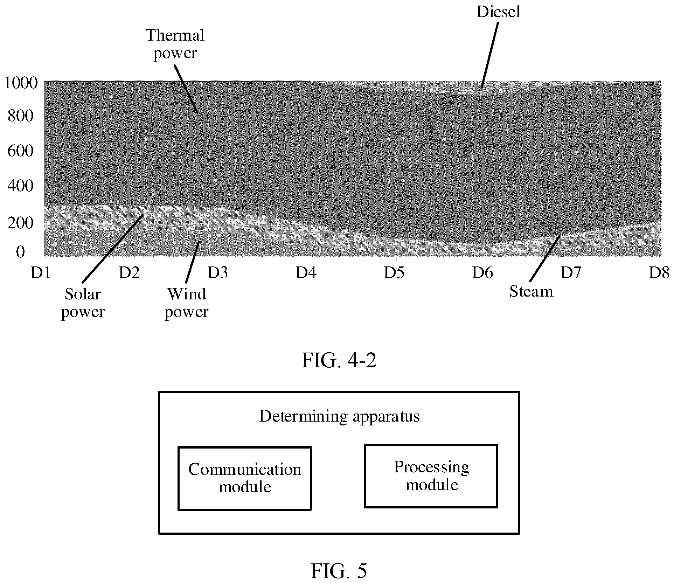

Because carbon emissions generated by unit electric energy generated in different electricity generation manners generally differ greatly, the cloud management platform obtains the electricity composition proportion from the electricity input side of the target cloud data center. This helps determine carbon emissions more accurately. The electricity composition proportion indicates a proportion of electric energy generated by each electricity generation manner used by the electricity input side in total electric energy generated by the electricity input side. FIG. 4-1 shows an example of an electricity composition proportion obtained by the cloud management platform. Because the electricity composition proportion on the electricity input side may change, optionally, the electricity composition proportion includes proportions of different electricity generation manners at each moment in total electricity provided by the electricity input side. This helps determine carbon emissions more accurately. FIG. 4-2 shows an example of another electricity composition proportion obtained by the cloud management platform.

As shown in FIG. 4-2, non-nuclear green energy may not be stably supplied. Therefore, thermal power is often required to perform supplementation. In extreme cases, a diesel generator built by the data center may be required for emergency power supply. Therefore, from a long period of time, an electricity carbon intensity of the target cloud data center is not fixed but fluctuates. Carbon emissions of a device equal the electricity carbon intensity multiplied by electric energy consumption of the device. Therefore, the electricity carbon intensity directly affects the carbon emissions, and minute-level monitoring of electricity input is also necessary.

A time sequence between step S203 and the foregoing steps is not limited in this application. Optionally, only the energy consumption and the electricity composition proportion are obtained before step S204.

S204: Determine the carbon emissions based on the energy consumption and the electricity composition proportion.

The cloud management platform determines the carbon emissions based on the energy consumption and the electricity composition proportion. Because carbon emissions generated by unit electric energy generated in different electricity generation manners generally differ greatly, by way of comprehensively considering the energy consumption of the cloud resource in the target cloud data center and the electricity composition proportion on the electricity input side, this helps determine carbon emissions more accurately.

Optionally, the method process shown in FIG. 2 is a possible detailed process of step S102. After determining the carbon emissions, the cloud management platform may output a query result to the tenant.

Refer to FIG. 5. FIG. 5 is a diagram of a structure of a determining apparatus for carbon emissions of a public cloud-based cloud resource according to this application. The determining apparatus may be the cloud management platform or a functional module in the cloud management platform mentioned above, and may perform some or all of the steps in the method shown in FIG. 1-2 and/or the method shown in FIG. 2.

As shown in FIG. 5, the determining apparatus includes a communication module and a processing module. The communication module is configured to perform steps S101 and S103, and optionally perform the optional method in the foregoing steps. The processing module is configured to perform step S102, and optionally perform the optional method in the foregoing steps.

Optionally, the processing module may further perform at least one of steps S201 to S204.

Data may be transmitted between the communication module and the processing module through a communication channel. It should be understood that the modules included in the determining apparatus may be software modules, or may be hardware modules, or some of the modules are software modules and some of the modules are hardware modules. For possible implementations and beneficial effects of the determining apparatus, refer to related content of the method example shown in FIG. 1-2 or FIG. 2. Details are not described herein again.

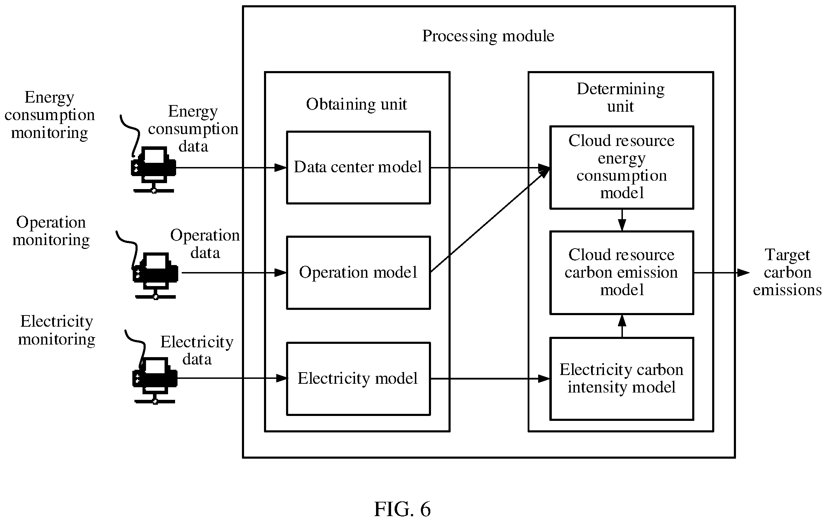

FIG. 6 shows an example of a possible specific structure of the processing module shown in FIG. 5. Refer to FIG. 6. The processing module includes an obtaining unit and a determining unit. The obtaining unit includes an electricity model, an operation model, and a data center model, and the determining unit includes a cloud resource energy consumption model, an electricity carbon intensity model, and a cloud resource carbon emission model.

Refer to FIG. 6. Energy consumption monitoring is used to monitor energy consumption data of an infrastructure. The electricity model is used to obtain energy consumption data of a target cloud data center from the energy consumption data of the infrastructure in response to a query request, and then input first power consumption, second power consumption, and third power consumption to the cloud resource energy consumption model.

It is assumed that both a first electrical device in a resource type device and a second electrical device in an operation type device are IT devices, and different IT devices may mainly provide different types of IT resources. Optionally, the IT devices may be classified based on the types of IT resources. FIG. 1-1 is still used as an example. In the server 1 to the server 3, assuming that the server 1 has a maximum computing resource, the server 2 has a maximum storage resource, and the server 3 has a maximum network resource, it may be considered that the server 1 to the server 3 are respectively a computing device, a storage device, and a network device. Optionally, the foregoing power consumption indicates power consumption of each type of IT device. Table 1 shows an example in which the data center model classifies the energy consumption data of the data center. Refer to Table 1. Consumed electric energy indicated by first power consumption information, second power consumption information, and third power consumption information output by the data center model are 26936 Wh, 12994 Wh, and 5335 Wh respectively.

**Table 1**

| Device classification | Sub-category | Specific device | Power consumption Wh | Total power consumption Wh |
|---|---|---|---|---|
| Operation type device | Computing | 30 management servers | 6840 | 12994 |
| | Storage | 10 storage servers | 2520 | |
| | Network | 2 top-layer switches | 80 | |
| | | 2 BMC switches | 66 | |
| | | 4 Tor switches | 156 | |
| | | 2 three-layer switches | 1700 | |
| | | 8 network servers | 1632 | |
| Resource type device | Computing | 100 computing servers of various types | 6900 | 26936 |
| | Storage | 20 storage servers | 5010 | |
| | | 3 object storage servers | 4650 | |
| | Network | 2 BMC switches | 92 | |
| | | 8 Tor switches | 336 | |
| | | 2 LVS servers | 6900 | |
| | | 2 firewalls | 3700 | |
| Data center environment control device | | Cooler, humidifier, air conditioner, and the like | 5335 | 5335 |

Operation monitoring is used to monitor operation data of the infrastructure. The operation model of the cloud data center is used to obtain operation data of the target cloud data center from the operation monitoring in response to the query request, and then input first utilization, second utilization, and third utilization to the cloud resource energy consumption model.

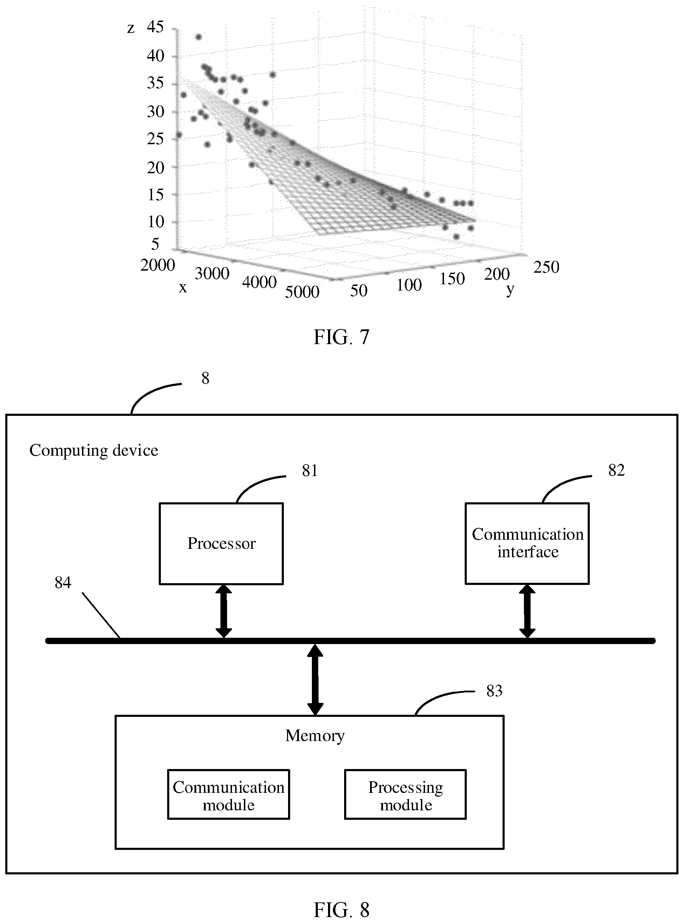

The cloud resource energy consumption model is used to separately input information output by the operation model and information output by the data center model, and then input energy consumption generated by the cloud resource in the target cloud data center in each of one or more time periods (energy consumption information of the cloud resource for short) to the cloud resource carbon emission model. Optionally, the energy consumption information of the cloud resource indicates an energy consumption surface of resource quantity-utilization rate shown in FIG. 7. Each point in FIG. 7 represents a cloud resource running on the resource type device, and coordinates x, y, and z of each point respectively indicate a size of a virtual IT resource allocated to the cloud resource, utilization of the virtual IT resource, and energy consumption of the cloud resource. Optionally, the energy consumption surface shown in FIG. 7 is obtained by performing multiple regression on a plurality of points shown in FIG. 7 based on total electric energy consumed by the target cloud data center, to ensure that a sum of electric energy consumed by all cloud resources determined based on the energy consumption surface shown in FIG. 7 is less than or equal to the total electric energy consumed by the target cloud data center. Optionally, the energy consumption information of the cloud resource indicates an energy consumption surface corresponding to each of the one or more time periods.

Still refer to FIG. 6. Electricity monitoring is used to monitor electricity data, and the electricity data indicates an electricity composition proportion on an electricity input side of the infrastructure. The electricity model is used to: in response to the query request, obtain the electricity composition proportion on the electricity input side of the target cloud data center from the electricity data, and then input the electricity composition proportion to the cloud resource carbon emission model.

The electricity carbon intensity model is used to input the electricity composition proportion, and input a carbon intensity curve to the cloud resource carbon emission model based on an electricity carbon intensity corresponding to each power composition. Optionally, the carbon intensity curve indicates that an electricity carbon intensity of electric energy introduced by the target cloud data center in an operation cycle changes with time. The electricity carbon intensity is carbon emissions generated by an electricity generation device in a process of generating unit electric energy.

The cloud resource carbon emission model is used to separately input information input by the cloud resource energy consumption model to the cloud resource carbon emission model and information input by the power carbon intensity model to the cloud resource carbon emission model, and then output carbon emissions of the target cloud resource in each of the one or more time periods. Optionally, the information input by the cloud resource energy consumption model to the cloud resource carbon emission model includes, for example, the energy consumption surface of resource quantity-utilization rate shown in FIG. 7, the information input by the electricity carbon intensity model to the cloud resource carbon emission model includes the carbon intensity curve, and the cloud resource carbon emission model determines a carbon intensity surface of resource quantity-utilization rate based on the energy consumption surface of resource quantity-utilization rate and the carbon intensity curve, and obtains a carbon emission curve of the cloud resource in the target time period by using a resource quantity and utilization in the target time period. After integration, target carbon emissions of the cloud resources in the target time period are obtained, and then carbon emissions for each of the one or more time periods are obtained.

An implementation of the foregoing model is not limited in this application. Optionally, at least one of the foregoing models may be obtained through training by using a machine learning model. The determining apparatus shown in FIG. 6 provides a multi-dimensional modeling and monitoring policy from a cloud resource to a physical resource, from the physical resource to the target cloud data center, from general power consumption to electricity input, and the like, and forms an algorithm expectation to accurately compute carbon emissions of the cloud resource. The energy consumption monitoring, the operation monitoring, and the electricity monitoring shown in FIG. 6 provide accurate multi-dimensional data for the model in the obtaining unit separately, provide input for each algorithm model in the determining unit after the model in the obtaining unit is converted and evenly allocated, and finally, the algorithm model in the determining unit provides accurate carbon emissions of each cloud resource.

It should be noted that, the processing module is not limited in this application to directly obtain corresponding data from the energy consumption monitoring, the operation monitoring, or the electricity monitoring. The energy consumption data is used as an example. The energy consumption monitoring may store monitored energy consumption data in the infrastructure or another storage device other than the infrastructure. For example, the storage device is a database, and the processing module may obtain the energy consumption data from the database.

It should be noted that the structure of the foregoing system architecture, apparatus, or module is merely an example, and should not constitute a specific limitation. Modules in the system architecture, apparatus, or module may be added, reduced, or combined as required. In addition, operations and/or functions of the modules in the system or apparatus are intended to implement corresponding processes of the corresponding method. For brevity, details are not described herein again.

Refer to FIG. 8. FIG. 8 is a diagram of a structure of a computing device according to an embodiment of this application. As shown in FIG. 8, the computing device 8 includes a processor 81, a communication interface 82, and a memory 83. The processor 81, the communication interface 82, and the memory 83 communicate with each other through a bus 84. The computing device 8 may be a server or a terminal device. It should be understood that a quantity of processors and memories in the computing device 8 is not limited in this application.

The bus 84 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is indicated by using only one line in FIG. 8. However, it does not indicate that there is only one bus or only one type of bus. The bus 84 may include a path for transmitting information between components (for example, the memory 83, the processor 81, and the communication interface 82) of the computing device 8.

The processor 81 may include any one or more of processors such as a central processing unit (central processing unit, CPU), a graphics processing unit (graphics processing unit, GPU), a microprocessor (microprocessor, MP), or a digital signal processor (digital signal processor, DSP). The memory 83 may include a volatile memory (volatile memory), for example, a random access memory (random access memory, RAM). The processor 81 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 83 stores executable program code. The processor 81 executes the executable program code to separately implement functions of the communication module and the processing module, so as to implement the determining method for carbon emissions of the public cloud-based cloud resource (for example, including S101 to S203, and/or including S201 to S204). That is, the memory 83 stores instructions used to perform the determining method for carbon emissions of the public cloud-based cloud resource.

The communication interface 82uses a transceiver module such as, but not limited to, a network interface card or a transceiver to implement communication between the computing device 8 and other devices or communication networks.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

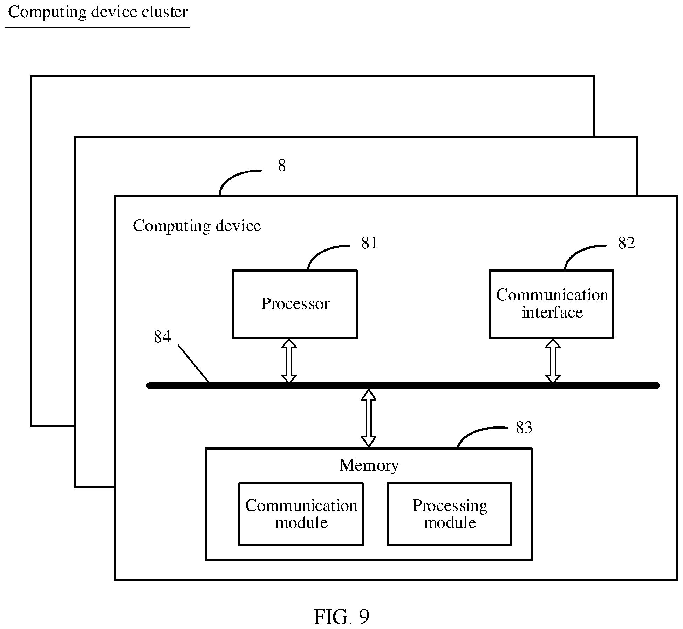

As shown in FIG. 9, the computing device cluster includes at least one computing device 8. A memory 83 in one or more computing devices 8 in the computing device cluster may store the same instructions used to performing the determining method for carbon emissions of the public cloud-based cloud resource.

In some possible implementations, the memory 83 in the one or more computing devices 8 in the computing device cluster may also separately store some instructions used to perform the determining method for carbon emissions of the public cloud-based cloud resource. In other words, a combination of the one or more computing devices 8 may jointly execute the instructions used to perform the determining method for carbon emissions of the public cloud-based cloud resource. It should be noted that memories 83 in different computing devices 8 in the computing device cluster may store different instructions respectively used to perform some functions of a determining apparatus. In other words, the instructions stored in the memories 83 in the different computing devices 8 may implement functions of one or more of a communication module and a processing module.

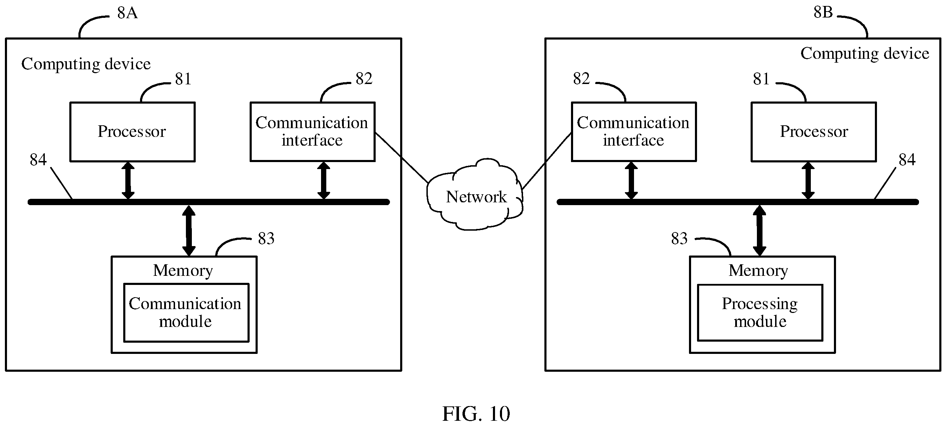

In some possible implementations, the one or more computing devices in the computing device cluster may be connected through a network. The network may be a wide area network, a local area network, or the like. FIG. 10 shows a possible implementation. As shown in FIG. 10, two computing devices 8A and 8B are connected through a network. Specifically, each computing device is connected to the network through a communication interface of the computing device. In this type of possible implementation, a memory 83 in the computing device 8A stores instructions used to perform a function of the communication module. In addition, a memory 83 in the computing device 8B stores instructions used to perform a function of the processing module. A connection manner between computing device clusters shown in FIG. 10 may be that, considering that the determining method for carbon emissions of the public cloud-based cloud resource provided in this application requires a large quantity of computing processes (for example, determining target energy consumption based on target information), it is considered that the function implemented by the processing module is performed by the computing device 8B.

It should be understood that functions of the computing device 8A shown in FIG. 10 may alternatively be completed by a plurality of computing devices 8. Similarly, functions of the computing device 8B may alternatively be completed by a plurality of computing devices 8.

A device configured to run a cloud management platform is not limited in this application. In some examples, the cloud management platform runs on one or more devices in an infrastructure, or runs on one or more devices outside the infrastructure. Optionally, the device configured to run the cloud management platform is shown in FIG. 8, FIG. 9, or FIG. 10.

This application further provides a computer program product including instructions. The computer program product may be a software or program product that includes instructions and that can run on a computing device or be stored in any usable medium. When the computer program product runs on at least one computing device, the at least one computing device is enabled to perform all or some steps in any one of the foregoing method examples, for example, perform steps S101 to S103, and/or perform steps S201 to S204.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct the computing device to perform all or some steps in any one of the foregoing method examples, for example, perform steps S101 to S103, and/or perform steps S201 to S204. In the foregoing examples, descriptions of the examples have respective focuses. For a part that is not described in detail in an example, refer to related descriptions in other examples. It should be noted that, for brief description, the foregoing method examples are represented as a series of action combinations. However, persons skilled in the art should understand that this application is not limited to the described action order, because some steps may be performed in other orders or simultaneously according to this application. It should be further appreciated by persons skilled in the art that examples described in this specification all belong to examples, and the involved actions and modules are not necessarily required by this application.

In the several examples provided in this application, it should be understood that the disclosed apparatus may be implemented in other manners. For example, the described apparatus example is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of examples.

In the specification, claims, and accompanying drawings of this application, the terms "first", "second", "third", "fourth", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device. In embodiments of this application, the term "a plurality of" means two or more. It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A determining method for carbon emissions, wherein the method is applied to a cloud management platform, the cloud management platform is configured to manage an infrastructure that provides a cloud resource, the infrastructure comprises a plurality of cloud data centers disposed in different areas, and the method comprises:
Providing, by the cloud management platform, a query interface, wherein the query interface is configured to obtain a query request of a tenant, the query request is used to query energy consumption information of a cloud resource that belongs to the tenant, and the cloud resource that belongs to the tenant runs in a target cloud data center of the infrastructure;
Generating, by the cloud management platform, a query result in response to the query request, wherein the query result indicates carbon emissions generated by the cloud resource in the target cloud data center in each of one or more time periods; and
Providing, by the cloud management platform, the query result for the tenant.

2. The method according to claim 1, wherein the generating, by the cloud management platform, a query result in response to the query request comprises:
Determining, by the cloud management platform, first power consumption of a resource type device associated with the cloud resource, first utilization of the cloud resource on the resource type device, second power consumption of an operation type device associated with the cloud resource, second utilization of the cloud resource on the operation type device, third power consumption of a data center environment control device associated with the cloud resource, and third utilization of the cloud resource on the data center environment control device that are in the target cloud data center;
determining, by the cloud management platform based on the first power consumption, the second power consumption, the third power consumption, the first utilization, the second utilization, and the third utilization, energy consumption generated by the cloud resource in the target cloud data center in each of the one or more time periods;
obtaining, by the cloud management platform, an electricity composition proportion from an electricity input side of the target cloud data center; and
determining, by the cloud management platform, the carbon emissions based on the energy consumption and the electricity composition proportion.

3. The method according to claim 2, wherein the electricity composition proportion comprises proportions of different electricity generation manners at each moment in total electricity provided by the electricity input side.

4. The method according to claim 2 or 3, wherein the resource type device is a set of first electrical devices configured to bear the cloud resource.

5. The method according to any one of claims 2 to 4, wherein the operation type device is a set of second electrical devices configured to manage the cloud resource.

6. The method according to any one of claims 2 to 5, wherein the data center environment control device is a set of third electrical devices configured to provide proper temperature and/or humidity for the cloud resource.

7. The method according to any one of claims 2 to 6, wherein the cloud resource comprises a virtual instance, or the cloud resource comprises a virtual service running on a virtual instance.

8. The method according to claim 7, wherein the first utilization is determined based on at least one of the following information:
a size of an information technology IT resource of the resource type device, utilization of the IT resource of the resource type device, a size of a virtual IT resource, utilization of the virtual IT resource, a size of another virtual IT resource, utilization of the another virtual IT resource, a type of the virtual instance, and a life cycle of the virtual instance, wherein the virtual IT resource is an IT resource allocated by the resource type device to the virtual instance, the another virtual IT resource is an IT resource allocated by the resource type device to another virtual instance, and the another virtual instance is a virtual instance other than the virtual instance running on the resource type device.

9. The method according to claim 7 or 8, wherein a target virtual instance comprises a virtual instance of a target type or a target area in all virtual instances that belong to the tenant, and the virtual instance of the target area is a virtual instance running in a cloud data center of the target area.

10. A determining apparatus for carbon emissions, wherein the determining apparatus is used in a cloud management platform, the cloud management platform is configured to manage an infrastructure that provides a cloud resource, the infrastructure comprises a plurality of cloud data centers disposed in different areas, and the apparatus comprises:
a communication module, configured to provide a query interface, wherein the query interface is configured to obtain a query request of a tenant, the query request is used to query energy consumption information of a cloud resource that belongs to the tenant, and the cloud resource that belongs to the tenant runs in a target cloud data center of the infrastructure; and
a processing module, configured to generate a query result in response to the query request, wherein the query result indicates carbon emissions generated by the cloud resource in the target cloud data center in each of one or more time periods, wherein
the communication module is further configured to provide the query result for the tenant.

11. The apparatus according to claim 10, wherein the processing module is specifically configured to:
determine first power consumption of a resource type device associated with the cloud resource in the target cloud data center, first utilization of the cloud resource on the resource type device, second power consumption of an operation type device associated with the cloud resource, second utilization of the cloud resource on the operation type device, third power consumption of a data center environment control device associated with the cloud resource, and third utilization of the cloud resource on the data center environment control device;
determine, based on the first power consumption, the second power consumption, the third power consumption, the first utilization, the second utilization, and the third utilization, energy consumption generated by the cloud resource in the target cloud data center in each of the one or more time periods;
obtain an electricity composition proportion from an electricity input side of the target cloud data center; and
determine the carbon emissions based on the energy consumption and the electricity composition proportion.

12. The apparatus according to claim 11, wherein the electricity composition proportion comprises proportions of different electricity generation manners at each moment in total electricity provided by the electricity input side.

13. The apparatus according to claim 11 or 12, wherein the resource type device is a set of first electrical devices configured to bear the cloud resource.

14. The apparatus according to any one of claims 11 to 13, wherein the operation type device is a set of second electrical devices configured to manage the cloud resource.

15. The apparatus according to any one of claims 11 to 14, wherein the data center environment control device is a set of third electrical devices configured to provide proper temperature and/or humidity for the cloud resource.

16. The apparatus according to any one of claims 11 to 15, wherein the cloud resource comprises a virtual instance, or the cloud resource comprises a virtual service running on a virtual instance.

17. The apparatus according to claim 16, wherein the first utilization is determined based on at least one of the following information:
a size of an information technology IT resource of the resource type device, utilization of the IT resource of the resource type device, a size of a virtual IT resource, utilization of the virtual IT resource, a size of another virtual IT resource, utilization of the another virtual IT resource, a type of the virtual instance, and a life cycle of the virtual instance, wherein the virtual IT resource is an IT resource allocated by the resource type device to the virtual instance, the another virtual IT resource is an IT resource allocated by the resource type device to another virtual instance, and the another virtual instance is a virtual instance other than the virtual instance running on the resource type device.

18. The apparatus according to claim 16 or 17, wherein a target virtual instance comprises a virtual instance of a target type or a target area in all virtual instances that belong to the tenant, and the virtual instance of the target area is a virtual instance running in a cloud data center of the target area.

19. A computing device cluster, comprising at least one computing device, wherein each computing device comprises a memory and a processor; and
a processor of the at least one computing device is configured to execute instructions stored in a memory of the at least one computing device, to enable the computing device cluster to perform the method according to any one of claims 1 to 9.

20. A computer-readable storage medium, wherein the computer-readable storage medium stores a computer program, and when the computer program is executed by a processor, the processor performs the method according to any one of claims 1 to 9.

21. A system, comprising a cloud management platform and an infrastructure configured to provide a cloud resource, wherein the infrastructure comprises a plurality of cloud data centers disposed in different areas, and the cloud management platform is configured to perform the method according to any one of claims 1 to 9.
